# EUROPÄISCHE PATENTSCHRIFT

(11) **EP 2 428 918 B1**
(45) Veröffentlichungstag und Bekanntmachung des Hinweises auf die Patenterteilung: **12.07.2017**
(21) Anmeldenummer: 11007400.2
(22) Anmeldetag: 12.09.2011
(51) Int. Cl.: G06K 19/073, G06F 21/00, G07D 7/00, H04L 9/06, H04L 9/00

(54) **Portabler Datenträger**
Portable data carrier
Support de données portatif

(30) Priorität: 14.09.2010 DE 102010045328
(43) Veröffentlichungstag der Anmeldung: 14.03.2012
(73) Patentinhaber: Giesecke & Devrient GmbH, 81677 München (DE)
(72) Erfinder: Butz, Klaus, 81675 München (DE); Lamla, Michael, 80638 München (DE); Wirén, Arvid, 81927 München (DE)

(56) Entgegenhaltungen:
- EP-A1- 2 230 617
- DE-A1-102004 009 622
- DE-A1-102005 058 238
- DE-A1-102006 048 969
- US-A1- 2008 072 051

## Beschreibung

Die vorliegende Erfindung betrifft einen portablen Datenträger mit zumindest einer nicht-flüchtigen Speicherzelle, ein Verfahren in einem solchen Datenträger sowie ein System umfassend einen solchen Datenträger und ein Lesegerät. Insbesondere betrifft die vorliegende Erfindung portable Datenträger in Form von Chipkarten, Identifikationskarten, Karten mit Bezahlfunktion, Smart-Cards, (U)SIM-Mobilfunkkarten, sicheren Multimediakarten und dergleichen.

Es ist bekannt, derartige Datenträger auf unterschiedlichste Weise anzugreifen, um Fehlfunktionen und Fehlberechnungen in dem Datenträger hervorzurufen, in deren Folge beispielsweise sicherheitsrelevante Daten unbefugt ausgelesen oder Sicherheitsabfragen, wie z.B. eine PIN-Abfrage, umgangen werden können. In diesen Zusammenhang sind insbesondere Angriffe durch Variation der Versorgungsspannung, Lichteinstrahlung, Wärme- oder Kälteeinfluss und dergleichen bekannt, aber auch Angriffe basierend auf der Bestrahlung des Datenträgers mittels ionisierender Strahlung und insbesondere mit Alphastrahlung.

Bei einem mit ionisierender Strahlung bestrahlten Halbleiterbauteil können zuvor nicht leitfähige Bereiche des Halbleiterbauteils durch die Ionisierung kurzzeitig leitfähig werden, wodurch in dem Datenträger Programmabläufe an entscheidenden Stellen verändert oder Fehler in kryptographischen Berechnungen hervorgerufen werden, aus denen mittels differentieller Fehleranalyse (DFA) Rückschlüsse auf geheime Daten des Datenträgers möglich sind.

Zur Erkennung von derartigen Angriffen schlägt die DE 103 45 240 A1 eine integrierte Schaltung mit einem strahlungsempfindlichen Element vor, welches eine Schaltungseigenschaft besitzt, die sich nach ausreichender Strahlungsdosis irreversibel ändert. Dann wird die integrierte Schaltung z.B. abgeschaltet. Das strahlungsempfindliche Element ist hier eine in Sperrichtung betriebene Diode, deren Sperrstrom unter der Strahlungseinwirkung bis zu einem vorgegebenen Grenzwert ansteigt, bei dessen Erreichen die integrierte Schaltung abgeschaltet wird. Alternativ kann auch ein Transistor oder ein Polysiliziumwiderstand als strahlungsempfindliches Element verwendet werden.

Bis zum Abschalten der integrierten Schaltung infolge eines Angriffs bedarf es jedoch einer vergleichsweise hohen Strahlungsdosis, so dass aufgrund mangelnder Empfindlichkeit des strahlungsempfindlichen Elements nicht alle Angriffe sicher detektiert werden können. Da sich die Schaltungseigenschaft des strahlungsempfindlichen Elements irreversibel ändert, wird die über die gesamte Lebensdauer des Datenträgers einwirkende Strahlungsdosis summarisch gemessen, so dass die Gesamtstrahlungsdosis, bei der der Datenträger abgeschaltet wird, ausreichend groß gewählt sein muss.

Die WO 2008/070071 und die US 2008 / 0129504 betreffen RFID-Etiketten, mit einem strahlungsempfindlichen Datenspeicher, in dem ein individueller Code gespeichert ist. Bei Strahlungseinwirkung treten Fehler in dem strahlungsempfindlichen Datenspeicher auf, so dass durch Auslesen des Codes festgestellt werden kann, ob das Etikett zuvor einer erhöhten Strahlung ausgesetzt war. Die unmittelbare Erkennung eines Strahlungsangriffs und ein möglichst zeitnahes Deaktivieren des RFID-Etiketts ist jedoch nicht vorgesehen.

DE 10 2004 009 622 A1 offenbart ein Halbleiterbauelement, bei dem Bulk-Anschlüsse vorgesehen sind, über die ein Strom in der Sperrrichtung von Bulk-Dioden zwischen dotierten Wannen und einer Grunddotierung des Halbleiterkörpers festgestellt wird, um so bei Lichteinstrahlung eine Alarm- oder Schutzfunktion auslösen zu können.

DE 10 2005 058 238 A1 offenbart eine Schaltung, bei der sieben Transistoren derart miteinander verschaltet sind, dass eine digitale Detektorschaltung realisiert ist. Bei einer Manipulation kippt der Zustand der Detektorschaltung, so dass der Manipulationsversuch erkennbar ist. In einer vorteilhaften Ausgestaltung sind mehrere Detektorschaltungen in einer Kette miteinander verbunden, so dass ein einen Manipulationsversuch anzeigendes Signal durch die Kette propagiert. In einer günstigen Anwendung ist eine Vielzahl der Detektorschaltungen in ein Speicherfeld integriert. Außerdem betrifft die Erfindung ein Verfahren zum Betreiben einer Schaltungsanordnung, bei dem externe Manipulationen erfasst werden.

Es ist demzufolge die Aufgabe der vorliegenden Erfindung, einen portablen Datenträger zuverlässig und rechtzeitig vor Angriffen mittels ionisierender Strahlung zu schützen.

Diese Aufgabe wird mit den Merkmalen der unabhängigen Ansprüche gelöst. In davon abhängigen Ansprüchen sind vorteilhafte Ausgestaltungen und Weiterbildungen der Erfindung angegeben.

Ein erfindungsgemäßer Datenträger umfasst zumindest eine nicht-flüchtige Speicherzelle, eine Überwachungseinrichtung und eine Steuereinrichtung. In einem Überwachungsmodus überwacht die Überwachungseinrichtung permanent, d.h. im Wesentlichen ununterbrochen, einen Stromfluss zwischen zwei Anschlüssen der zumindest einen Speicherzelle, um dadurch eine reversible Änderung des Stromflusses zu erkennen, die auf einen Angriff mittels ionisierender Strahlung hindeutet, insbesondere auf einen Angriff mit Alphastrahlung. Die Steuereinrichtung schaltet den Datenträger in Abhängigkeit von der auf einen Angriff mittels ionisierender Strahlung hindeutenden Änderung des Stromflusses in einen abgesicherten Zustand.

Durch die permanente Überwachung des Stromflusses kann in dem Überwachungsmodus ein Angriff mittels ionisierender Strahlung zuverlässig und zeitnah erkannt werden. Der Datenträger wird dann umgehend in den abgesicherten Zustand geschaltet, wodurch ein solcher Angriff sicher abgewehrt wird. Durch die Verwendung einer nicht-flüchtigen Speicherzelle zur Detektion der ionisierenden Strahlung wird eine hohe Detektionsempfindlichkeit erzielt, da Änderungen des Stromflusses infolge der Einwirkung ionisierender Strahlung erkannt werden, die reversibel sind. Auf diese Weise sind einzelne Angriffe unterscheidbar und separat quantifizierbar, da die auf den Datenträger im Zeitraum zwischen Einschalten (oder genauer, der Initialisierung) und Herunterfahren des Datenträgers einwirkende Strahlungsdosis gemessen und überwacht werden kann.

Die Steuereinrichtung schaltet den Datenträger bei einem Angriff mittels ionisierender Strahlung aufgrund einer entsprechenden Änderung des Stromflusses durch die Speicherzelle in den abgesicherten Zustand. Alternativ kann die Steuereinrichtung oder eine andere Komponente des Datenträgers auch derart ausgestaltet sein, dass eine auftretende Änderung des Stromflusses wieder ausgeglichen wird. In diesem Fall kann die Steuereinrichtung die Anzahl solcher reversiblen Änderungen des Stromflusses zählen und den Datenträger erst nach einer vorgegebenen Anzahl von erkannten Angriffen in den abgesicherten Zustand schalten.

Besonders bevorzugt überwacht die Überwachungseinrichtung den Stromfluss zwischen einem Source-Anschluss und einem Drain-Anschluss einer EPROM-Speicherzelle oder einer EEPROM-Speicherzelle des Datenträgers. Derartige (E)EPROM-Speicherzellen bestehen im Wesentlichen aus einem Feldeffekttransistor mit einem isolierten Gate (einem so genannten "floating Gate"), auf das zur Datenspeicherung eine Ladung aufgebracht werden kann.

Üblicherweise erfolgt ein Lesevorgang einer solchen Speicherzelle durch die Selektierung dieser, und das Anlegen eines Potentials am "control gate" der Speicherzelle. Der Ladungszustand im "floating gate" beeinflusst dabei den Strom zwischen "drain" und "source", welcher in den Leseverstärkern über einen Schwellwert als eine logische 1 bzw. 0 interpretiert wird.

Das "floating gate" ist derart isoliert, dass die aufgebrachte Ladung über einen langen Zeitraum (z.B. über Jahrzehnte) hinweg nicht abfließen kann. Durch die Einwirkung von ionisierender Strahlung wird die Ladung auf dem "floating gate" jedoch schneller abgebaut, so dass sich der Stromfluss zwischen dem Source- und dem Drain-Anschluss der (E)EPROM-Speicherzelle unter Einwirkung von ionisierender Strahlung ändert.

Dieser Effekt wird vorliegend zur hochempfindlichen Strahlungsdetektion genutzt, um davon abhängig eine Änderung des Stromflusses zu detektieren. Daraus ergibt sich durch Über- bzw. Unterschreitung eines Schwellwertes in den Leserverstärkern eine Änderung des logischen Zustandes. In diesem Fall wird der Datenträger in den abgesicherten Zustand geschaltet.

Um erneut oder initial eine Ladung auf das "floating gate" der (E)EPROM-Speicherzelle aufzubringen, umfasst der Datenträger vorzugsweise eine entsprechende Ladeeinrichtung. Die Ladung kann beispielsweise durch gleichzeitiges Ansteuern eines so genannten Steueranschlusses und des Drain-Anschlusses der (E)EPROM-Speicherzelle aufgebracht werden. Hierdurch kann eine durch einen Strahlungsangriff hervorgerufene reversible Änderung des Stromflusses zwischen dem Source- und Drain-Anschluss der Speicherzelle wieder aufgehoben werden.

Der Stromfluss der Speicherzelle wird vorzugsweise erst nach dem Aufbringen der Ladung überwacht. Die Überwachung bzw. der Überwachungsmodus beginnt dann also erst, wenn sich eine ausreichende Ladung auf dem "floating gate" der Speicherzelle befindet. Alternativ kann der Überwachungsmodus auch vor dem Aufbringen der Ladung einsetzen. In diesem Fall wird sich jedoch, solange noch keine Ladung auf dem "floating gate" der Speicherzelle anliegt, ein Stromfluss in der Speicherzelle ergeben, der (fälschlicherweise) als Strahlenangriff erkannt werden könnte. In diesem Fall ist die Steuereinrichtung vorzugsweise eingerichtet, Erhöhungen des Stromflusses unberücksichtigt zu lassen, solange noch keine ausreichende Ladung auf das "floating gate" aufgebracht ist.

Der Datenträger bzw. seine Überwachungseinrichtung sind vorzugsweise so ausgestaltet, dass der Überwachungsmodus immer dann aktiviert ist, wenn ein Strahlenangriff prinzipiell erfolgreich sein könnte, d.h. die Sicherheit des Datenträgers gefährden könnte. Dementsprechend setzt der Überwachungsmodus vorzugsweise direkt nach der Initialisierung des Datenträgers ein. Die Initialisierung kann dabei z.B. lediglich darin bestehen, dass eine Ladung auf das Gate der Speicherzelle aufgebracht wird. Bei der Initialisierung werden vorzugsweise keinerlei Rechenoperationen oder Speicheroperationen in dem Datenträger durchgeführt, die durch einen Angriff mittels ionisierender Strahlung die Sicherheit des Datenträgers und der darin gespeicherten Danten gefährden könnten. Besonders bevorzugt führt der Datenträger bei der Initialisierung keinerlei Rechenoperationen und/ oder sonstige Operationen durch. Der Überwachungsmodus endet bevorzugt erst mit dem Ende eines Herunterfahres des Datenträgers.

Vorzugsweise umfaßt die Überwachungseinrichtung zumindest einen analogen Spannungskomparator, beispielsweise einen Operationsverstärker, zur permanenten Überwachung des Stromflusses einer Speicherzelle.

Die Steuereinrichtung schaltet den Datenträger vorzugsweise in den abgesicherten Zustand, indem sie vorgegebene Funktionalitäten des Datenträgers deaktiviert. Hierbei kann es sich um beliebige Funktionalitäten handeln. Vorzugsweise sind im sicheren Zustand jedoch sicherheitsrelevante Funktionalitäten deaktiviert, z.B. solche die kryptographische Operationen, Operationen im Zusammenhang mit sicherheitsrelevanten Daten, wie z.B. Paßwörtern oder kryptographischen Schlüsseln, oder dergleichen umfassen. Prinzipiell kann im abgesicherten Zustand jede Funktionalität deaktiviert werden, für die bekannt ist oder vermutet wird, dass sie wahrscheinliches Ziel eines Angriffs mittels ionisierender Strahlung ist. Beispielsweise können alle Funktionalitäten deaktiviert werden. Je nach Sicherheitsanforderungen und Art des Datenträgers können auch alle Funktionalitäten des Datenträgers dauerhaft oder temporär deaktiviert werden.

Gemäß einer bevorzugten Ausführungsform schaltet die Steuereinrichtung den Datenträger dauerhaft in den abgesicherten Zustand, um auszuschließen, dass der Datenträger durch weitere Angriffe letztlich doch noch in seiner Sicherheit beeinträchtigt wird. Ebenso ist es möglich, dass im abgesicherten Zustand bestimmte kritische Funktionen dauerhaft deaktiviert werden und andere lediglich für eine vorgegebene Zeitspanne, damit der Datenträger für weniger kritische oder grundlegende Funktionen nutzbar bleibt.

Die Speicherzelle ist vorzugsweise in einem Bereich von sicherheitsrelevanten elektronischen Bauteilen des Datenträgers oder in einem Chip des Datenträgers mit sicherheitsrelevanten elektronischen Bauteilen angeordnet. Damit können gezielte Angriffe auf diese Bauteile mittels ionisierender Strahlung sicher detektiert werden. Es ist technisch nicht möglich, das Ziel eines Angriffs mit ionisierender Strahlung z.B. mittels Abschirmungen beliebig genau zu bestimmen. Durch die Anordnung von einer oder mehreren erfindungsgemäßen Speicherzellen in einem Bereich mit sicherheitsrelevanten elektronischen Bauteilen oder über einen solchen Bereich verteilt, kann ein unspezifischer Angriff auf die sicherheitsrelevanten Bauteile jedoch ausreichend genau erkannt werden. Vorzugsweise kann der Datenträger auch dann in den abgesicherten Zustand geschaltet werden, wenn nicht nur bei einer einzelnen Speicherzelle eine signifikante Änderung des Stromflusses festgestellt wird, sondern wenn bei mehreren Speicherzellen Änderungen der jeweiligen Stromflüsse erkannt werden, die in der Summe auf einen Angriff mit ionisierender Strahlung hindeuten.

Gemäß einer bevorzugten Ausführungsform umfassen dabei die sicherheitsrelevanten elektronischen Bauteile zumindest eine Datenspeicherzelle, in der sicherheitsrelevante Daten gespeichert sind. Ferner kann es sich bei sicherheitsrelevanten Bauteilen auch um kryptographische Chips oder Prozessoren oder um Sicherheitschips oder -prozessoren handeln oder dergleichen.

Vorzugsweise ist die erfindungsgemäße zumindest eine Speicherzelle versteckt auf dem Datenträger oder innerhalb der sicherheitsrelevanten Bauteile oder dem Sicherheitschip angeordnet. Dies bedeutet, daß die Speicherzellen von einem Angreifer nicht mittels gewöhnlicher Untersuchungsmethoden im Datenträger erkannt und lokalisiert werden können, z.B. durch visuelle Untersuchung, Röntgenuntersuchung, mikroskopische Untersuchung oder dergleichen. Hierzu kann ein Speicherbaustein oder einen sonstige sicherheitsrelevante Komponente des Datenträgers sowohl erfindungsgemäße Speicherzellen zur Angriffserkennung als auch herkömmliche Datenspeicherzellen zur Datenspeicherung derart umfassen, dass die erfindungsgemäßen Speicherzellen von den Datenspeicherzellen mittels gewöhnlicher Untersuchungsmethoden nicht oder kaum unterscheidbar sind, insbesondere nicht anhand einer besonderen Anordnung und/ oder erkennbaren Ausgestaltung der erfindungsgemäßen Speicherzellen in dem Speicherbaustein.

Die zumindest eine Speicherzelle ist vorzugsweise derart ausgestaltet, dass der Stromfluss der Speicherzelle auf einen Angriff mit ionisierender Strahlung empfindlich reagiert. Dazu kann die Kennlinie der Speicherzelle derart vorgegeben werden, dass sich der Stromfluß der Speicherzelle bei einer Strahlungsdosis, die für einen Angriff mit ionisierender Strahlung zu gering ist, möglichst wenig ändert, z.B. bei der üblichen Hintergrundstrahlung in der Umgebung. Auf eine Strahlungsdosis, die auf einen Angriff mit ionisierender Strahlung hindeutet, reagiert der Stromfluß der Speicherzelle jedoch mit einer signifikanten Änderung. Vorzugsweise werden im Bereich der erfindungsgemäßen Speicherzellen keinerlei oder nur wenig Schutzmaßnahmen vor ionisierender Strahlung, durch Abschirmungen oder dergleichen, getroffen, während ein Schutz vor anderweitigen Störeinflüssen, insbesondere durch Lichteinstrahlung, vorgesehen ist.

Gemäß einer bevorzugten Ausführungsform umfasst der Datenträger mehrere erfindungemäße Speicherzellen, wobei die Überwachungseinrichtung Stromflüsse zwischen den jeweiligen Anschlüssen der mehreren Speicherzellen überwacht und die Steuereinrichtung bei einer auf einen Angriff mittels ionisierender Strahlung hindeutenden Änderung des Stromflusses in zumindest einer vorgegebenen Anzahl von Speicherzellen den Datenträger in den abgesicherten Zustand schaltet. Ebenso ist es möglich, daß die Steuereinrichtung den Datenträger in den abgesicherten Zustand schaltet, wenn die Gesamtänderung aller Stromflüsse in den mehreren Speicherzellen einen vorgegebenen Wert überschreitet.

Dadurch kann das frühzeitige Schalten des Datenträgers in den abgesicherten Zustand vermieden werden, wenn in einzelnen Speicherzellen zwar eine signifikante Änderung des Stromflusses erkannt wird, diese jedoch verglichen mit den weiteren Stromflüssen in allen anderen erfindungsgemäßen Speicherzellen wahrscheinlich nicht auf einen Angriff mittels ionisierender Strahlung zurückzuführen sind, sondern z.B. eher auf defekte Speicherzellen hindeuten. Um vor diesem Hintergrund eine sichere und robuste Detektion eines Strahlenangriffs zu ermöglichen, werden vorzugsweise mehrere, gegebenenfalls benachbarte Speicherzellen in einem Bereich eines sicherheitsrelevanten Bauteils des Datenträgers untergebracht.

Weitere Merkmale und Vorteile der Erfindung ergeben sich aus der folgenden Beschreibung der erfindungsgemäßen Ausführungsbeispiele sowie weiterer Ausführungsalternativen im Zusammenhang mit den Zeichnungen, die schematisch zeigen:
- Figur 1:: einen erfindungsgemäßen portablen Datenträger; und
- Figur 2:: einen Schaltkreis des Datenträgers mit erfindungsgemäßen Speicherzellen, einer Überwachungseinrichtung, einer Steuereinrichtung, und einer Ladeeinrichtung.

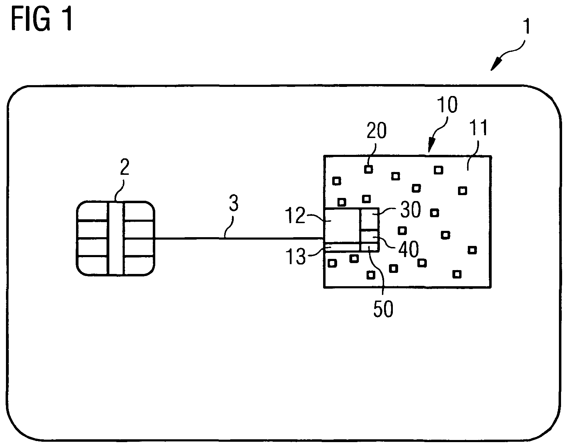

Figur 1 zeigt schematisch einen erfindungsgemäßen portablen Datenträger in Form einer Chipkarte 1. Die Chipkarte 1 umfaßt einen Chipkartenchip 10, der durch eine Datenleitung 3 mit den Kontaktflächen 2 der Chipkarte 1 verbunden ist. Zur einfacheren Visualisierung zeigt Fig. 1 eine Chipkarte 1, deren Chipkartenchip 10 seitlich neben den Kontaktflächen 2 liegt. Natürlich und in der Praxis bevorzugt kann sich der Chipkartenchip 10 auch direkt unter den Kontaktflächen 2 befinden. In dem vorliegenden Beispiel umfasst der Chipkartenchip 10 einen nichtflüchtigen Datenspeicher 11, vorliegend einen EPROM-Speicher oder EEPROM-Speicher, einen Prozessor 12 und einen flüchtigen Datenspeicher 13, z.B. einen RAM-Arbeitsspeicher. Prinzipiell sind die Chipkarte 1 und der Chipkartenchip 10 darüber hinaus mit allen üblichen und in der Praxis notwendigen weiteren Komponenten ausgestattet, die jedoch vorliegend nicht weiter behandelt werden, soweit sie für die Erfindung nicht relevant sind.

Der (E)EPROM-Speicher 11 umfasst neben der Vielzahl der Datenspeicherung dienenden Datenspeicherzellen (nicht gezeigt) auch mehrere besonders ausgestaltete Speicherzellen 20, um Angriffe mittels ionisierender Strahlung auf die Chipkarte 1 und deren Komponenten zu detektieren. Die Speicherzellen 20 sind mit einer Überwachungseinrichtung 30 verbunden (Verbindungen nicht dargestellt), die in der Ausführungsform gemäß Fig. 1 Bestandteil des Chipkartenchips 10 ist und in einem Überwachungsmodus permanent einen Stromfluss zwischen den Anschlüssen Source S und Drain D der Speicherzellen 20 überwacht. Weiterhin umfaßt der Chip 10 eine Steuereinrichtung 40, die in Abhängigkeit von der von der Überwachungseinrichtung detektierten Änderung des Stromflusses in den jeweiligen Speicherzellen 20 die Chipkarte 1 in einen abgesicherten Zustand schaltet. Eine Ladeeinrichtung 50 dient dem Aufbringen einer Ladung auf die Speicherzellen 20.

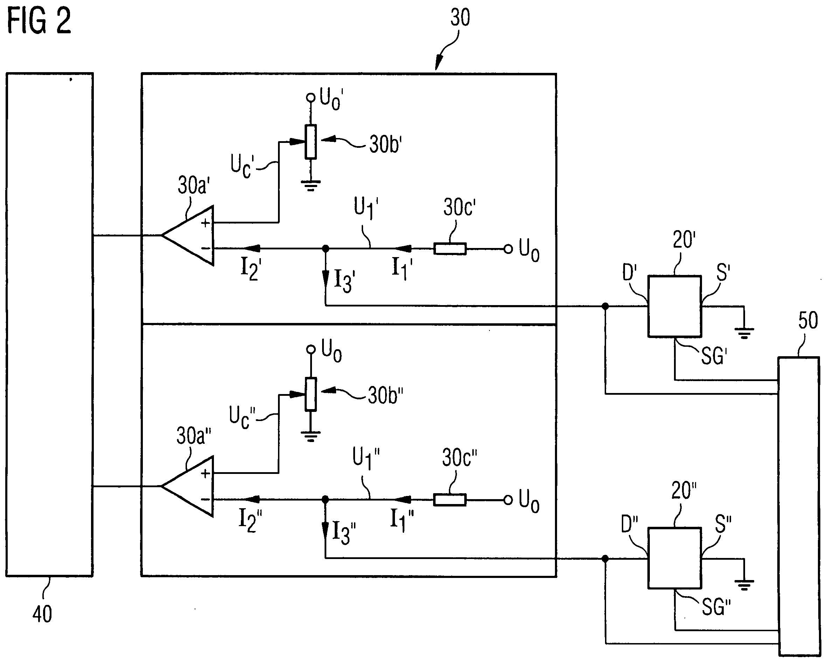

Figur 2 zeigt ein Schaltkreis des Chips 10 der Chipkarte 1, der mehrere Speicherzellen 20, eine Überwachungseinrichtung 30, eine Steuereinrichtung 40 und eine Ladeeinrichtung 50 umfasst. Der besseren Übersicht halber zeigt Fig. 2 nur zwei Speicherzellen 20' und 20" der Vielzahl an Speicherzellen 20 der Fig.1.

Um einen Angriff mittels ionisierender Strahlung zu detektieren, wird vor jeder Verwendung der Chipkarte 1 zunächst mittels der Ladeinrichtung 50 bei jeder Speicherzelle 20 eine Ladung auf ein Gate der Speicherzelle 20 aufgebracht oder eine bereits auf dem Gate vorhandene Teilladung aufgefrischt, d.h. auf einen vorgegebenen Ladungswert angehoben. Das Laden erfolgt durch Ansteuern eines Steueranschlusses SG und des Drain-Anschlusses D der jeweiligen Speicherzelle 20.

Das Gate der Speicherzelle 20 ist derart isoliert, dass die aufgebrachte Ladung über einen langen Zeitraum hinweg nicht abfließt. Unter Einwirkung ionisierender Strahlung entlädt sich das Gate jedoch wesentlich schneller, was anhand eines ansteigenden Stromflusses zwischen dem Source-Anschluss S und dem Drain-Anschluss D der jeweiligen (E)EPROM-Speicherzelle 20 festgestellt wird.

Nachdem die Ladung auf das Gate aufgebracht wurde oder aufgefrischt wurde, setzt der Überwachungsmodus ein, in dem die Überwachungseinrichtung 30 die Stromflüsse in den Speicherzellen 20 permanent überwacht. Der Stromfluß wird für jede Speicherzelle 20 einzeln mittels jeweiliger Spannungskomparatoren 30a bzw. Operationsverstärker überwacht. Dabei ist ein Eingang (+) des Spannungskomparators 30a mit einer Festspannungsquelle 30b verbunden. Ein zweiter Eingang (-) des Spannungskomparators 30a ist mit dem Drain-Anschluss D der Speicherzelle 20 verbunden und über einen Vorwiderstand 30c an eine Eingangsspannung Uo angeschlossen. Der Source-Anschluss S der Speicherzelle 20 ist auf Masse gelegt. Solange sich eine Ladung auf dem Gate der Speicherzelle 20 befindet, ist der Stromfluss I₃ durch die Speicherzelle gering und damit ist der Stromfluss I₁ durch den Widerstand 30c klein, da sich dieser aus dem Stromfluß I₃ und dem (ebenfalls geringen) Stromfluss I₂ zum Eingang (-) des Spannungskomparators 30a zusammensetzt. Dementsprechend fällt über den Widerstand 30c nur eine geringe Spannung ab und die an dem Eingang (-) der Spannungskomparators 30a anliegende Spannung ist nur geringfügig kleiner als die Spannung Uo. Falls durch Einwirkung ionisierender Strahlung die Ladung auf dem Gate der Speicherzelle reduziert wird, in der Folge der Stromfluss I₃ durch die Speicherzelle 20 steigt und dadurch der Stromfluss h steigt, fällt an dem Widerstand 30c eine höhere Spannung ab, d.h., die Spannung U₁ sinkt mit wachsendem Stromfluss durch die Speicherzelle 20.

Die Spannung der Festspannungsquelle 30b wird so gewählt, dass diese initial, d.h. bei vollständig geladenem Gate, kleiner ist als die Spannung U₁. So lange dies der Fall ist, gibt der Komparator 30a ein negatives Ausgangssignal aus. Wenn jedoch durch Einwirkung ionisierender Strahlung die Spannung U₁ unter die Spannung Uc der Festspannungsquelle 30b sinkt, wechselt das Ausgangssignal des Komparators 30a von negativ auf positiv. Dementsprechend wird in dem vorliegenden Ausführungsbeispiel durch die Spannung Uc der Festspannungsquelle 30b (im Zusammenhang mit der ebenfalls festen Eingangsspannung Uo und dem Widerstandswert des Widerstandes 30c) ein Schwellenwert festgelegt, ab dem der Stromfluss I₃ durch die Speicherzelle 20 und damit eine gemessene Strahlungsdosis als kritisch angesehen wird, d.h. als ein Angriff mittels ionisierender Strahlung interpretiert wird.

Die Steuereinrichtung 40 empfängt das Ausgangssignal der Überwachungseinrichtung 30. Wenn die Überwachungseinrichtung 30 bei einer vorgegebenen Anzahl von Speicherzellen 20, z.B. bei den beiden Speicherzellen 20' und 20" in Fig. 2, eine auf einen Angriff mittels ionisierender Strahlung hindeutenden Änderung des Stromflusses I₃ feststellt, deaktiviert die Steuereinrichtung 40 irreversibel alle Funktionalitäten der Chipkarte 1. Dies erfolgt im gezeigten Ausführungsbeispiel dadurch, dass ein Zähler auf dem Chip 10 dekrementiert wird, wenn die Überwachungseinrichtung 30 eine signifikante Stromflußänderung einer Speicherzelle 20 meldet, und die Steuereinrichtung 40 bei Erreichen des Zählerwerts "Null" alle Funktionalitäten der Chipkarte 1 irreversibel blockiert. Alternativ kann die Steuereinrichtung 40 auch ausschließlich analoge Bauteile umfassen und die Funktionalitäten der Chipkarte 1 dadurch deaktivieren, dass sie Teile des Chips 10 durch Anlegen einer Spannung zerstört.

Ebenso kann nach Feststellen einer reversiblen auf einen Angriff mittels ionisierender Strahlung hindeutenden Änderung des Stromflusses I₃ in einer der Speicherzellen 20 erneut eine Ladung auf das Gate dieser Speicherzelle 20 aufgebracht bzw. die Ladung aufgefrischt werden. Das Auftreten von reversiblen Stromflußänderungen wird dann gezählt und nach Erreichen einer vorgegebenen Anzahl an signifikanten Änderungen werden die Funktionalitäten der Chipkarte 1 deaktiviert.

In dem vorliegenden Ausführungsbeispiel werden sicherheitsrelevante Operationen in der Chipkarte 1 ausschließlich dann durchgeführt, wenn sich die Chipkarte 1 in dem Überwachungsmodus befindet.

In dem in Fig. 1 dargestellten Ausführungsbeispiel sind die zum Feststellen eines Angriffs mittels ionisierender Strahlung verwendeten nicht-flüchtigen Speicherzellen 20 in einem unregelmäßigen Muster über den (E)EPROM Speicher 11 verteilt. Zudem sind die nicht-flüchtigen Speicherzellen 20 so ausgestaltet, dass sie sich durch erkennbare Eigenschaften (insbesondere bei einer mikroskopischen Untersuchung des Chips 10) kaum von weiteren zur Datenspeicherung dienenden Datenspeicherzellen des (E)EPROM Speichers 11 unterscheiden. Hierdurch wird es einem Angreifer erschwert, die Speicherzellen 20 zu lokalisieren und zu manipulieren oder abzuschirmen. Ebenso sind die Überwachungseinrichtung 30, die Steuereinrichtung 40 und die Ladeeinrichtung 50 schwer lokalisierbar in den Chipkartenchip 10 eingebracht.

Zudem sind die Speicherzellen 20 derart über den Chip 10 verteilt, dass im Bereich der sicherheitsrelevanten Bauteile der Chipkarte 1 ausreichend viele Speicherzellen 20 vorgesehen sind, damit ein Strahlenangriff auf eines der sicherheitsrelevanten Bauteile immer bei mindestens einer vorgegebenen Anzahl von Speicherzellen 20 eine signifikante Änderung des Stromflusses bewirkt. Die Anordnung der Speicherzellen 20 in oder in der Nähre der sicherheitsrelevanten Bauteile ist dabei so ausgestaltet, daß ein Angriff von ausreichend vielen Speicherzellen 20 selbst dann erkannt wird, wenn der Angreifer durch externe Abschirmung des Chips 10 nur einen sehr kleinen Bereich des Chips 10 gezielt bestrahlt. Im vorliegenden Ausführungsbeispiel sind alle zur Datenspeicherung dienende Datenspeicherzellen des (E)EPROM-Speichers 11, der Prozessor 12, der flüchtige Datenspeicher 13, die Überwachungseinrichtung 30, die Steuereinrichtung 40 und die Ladeeinrichtung 50 sicherheitsrelevante elektronische Bauteile der Chipkarte 1.

Obwohl die zur Detektion von Angriffen mittels ionisierender Strahlung dienenden Speicherzellen 20 derart ausgestaltet sind, dass sie für einen Angreifer schwer zu lokalisieren und schwer von herkömmlichen Datenspeicherzellen zu unterscheiden sind, sind die Speicherzellen 20 zusätzlich derart optimiert, dass der Stromfluss jeder der Speicherzellen 20 auf einen Angriff mit ionisierender Strahlung empfindlich reagiert. Dazu werden die Speicherzellen 20 möglichst wenig (durch Abschirmung oder dergleichen) vor der zu detektierenden ionisierender Strahlung geschützt, während sie vor anderweitigen Störungen, die zwar den Stromfluß I₃ beeinflussen aber nicht auf ionisierende Strahlung zurückzuführen sind, z.B. Lichteinstrahlung oder dergleichen, ausreichend geschützt sind. Dadurch wird verhindert, daß der normale Tageslichteinfall als Angriff mittels ionisierender Strahlung fehlinterpretiert wird.

Die erfindungsgemäße Chipkarte 1 ist vor allen Angriffen mittels ionisierender Strahlung geschützt, insbesondere vor Alphastrahlung, Betastrahlung und Gammastrahlung. Einen besonders guten Schutz bietet die Erfindung jedoch vor Angriffen mittels Alphastrahlung.

## Patentansprüche

1. Portabler Datenträger (1), umfassend
zumindest eine nicht-flüchtige Speicherzelle (20) und
eine Überwachungseinrichtung (30), die eingerichtet ist, in einem Überwachungsmodus einen Stromfluss (I₃) zwischen einem Source-Anschluss (S) und einem Drain-Anschluss (D) der Speicherzelle (20) permanent zu überwachen, um eine Änderung des Stromflusses (I₃) zu erkennen, **gekennzeichnet durch**
eine Steuereinrichtung (40), die eingerichtet ist, abhängig von der erkannten Änderung des Stromflusses (I₃) den Datenträger (1) in einen abgesicherten Zustand zu schalten, indem vorgegebene Funktionalitäten des Datenträgers (1) deaktiviert werden,
wobei die Speicherzelle (20) eine EPROM-Speicherzelle (20) oder eine EEPROM-Speicherzelle (20) ist,
wobei der Datenträger eine Ladeeinrichtung enthält, die dazu eingerichtet ist, vor jeder Verwendung des Datenträgers (1) eine Ladung auf ein Gate der Speicherzelle (20) aufzubringen, um einen Angriff mittels ionisierender Strahlung durch ein Entladen des Gates zu detektieren, wobei ein ansteigender Stromfluss als Folge des Entladens des Gates ein Indiz für einen solchen Angriff ist.

2. Portabler Datenträger (1) nach Anspruch 1, **dadurch gekennzeichnet, dass** der Überwachungsmodus direkt nach einem Initialisieren des Datenträgers (1) startet.

3. Portabler Datenträger (1) nach einem der Ansprüche 1 bis 2, **dadurch gekennzeichnet, dass** die Steuereinrichtung (40) eingerichtet ist, den Datenträger (1) irreversibel in den abgesicherten Zustand zu schalten.

4. Portabler Datenträger (1) nach einem der Ansprüche 1 bis 3, **dadurch gekennzeichnet, dass** die Speicherzelle (20) in einem Bereich von sicherheitsrelevanten elektronischen Bauteilen des Datenträgers (1) oder in einem Chip (10) des Datenträgers (1) mit sicherheitsrelevanten elektronischen Bauteilen angeordnet ist.

5. Portabler Datenträger (1) nach Anspruch 4, **dadurch gekennzeichnet, dass** die sicherheitsrelevanten elektronischen Bauteile zumindest eine Datenspeicherzelle umfassen, in der sicherheitsrelevante Daten gespeichert sind.

6. Portabler Datenträger (1) nach Anspruch 4 oder 5, **dadurch gekennzeichnet, dass** die Speicherzelle (20) in dem Bereich sicherheitsrelevanter elektronischer Bauteile oder in dem Chip (10) angeordnet ist.

7. Portabler Datenträger (1) nach einem der Ansprüche 1 bis 6, **dadurch gekennzeichnet, dass** die Überwachungseinrichtung (30) zumindest einen analogen Spannungskomparator zum permanenten Überwachen des Stromflusses (I₃) umfasst.

8. Portabler Datenträger (1) nach einem der Ansprüche 1 bis 7, **dadurch gekennzeichnet, dass** der portable Datenträger (1) eine Chipkarte, eine Identifikationskarte, eine Karte mit Bezahlfunktion, eine Smart-Card, eine (U)SIM-Mobilfunkkarte oder eine sichere Multimediakarte ist.

9. Verfahren in einem portablen Datenträger (1) gemäß den Ansprüchen 1 bis 8 mit zumindest einer nicht-flüchtigen Speicherzelle (20), umfassend die Schritte:
permanentes Überwachen eines Stromflusses (I₃) zwischen einem Source-Anschluss (S) und einem Drain-Anschluss (D) der Speicherzelle (20) mittels einer Überwachungseinrichtung (30) des Datenträgers (1), um eine Änderung des Stromflusses (I₃) zu erkennen;
**gekennzeichnet durch**
Schalten des Datenträgers (1) in einen abgesicherten Zustand mittels einer Steuereinrichtung (40), abhängig von der erkannten Änderung des Stromflusses (I₃),
wobei die Speicherzelle (20) eine EPROM-Speicherzelle (20) oder eine EEPROM-Speicherzelle (20) ist,
wobei der Datenträger (1) eine Ladeeinrichtung enthält, die vor jeder Verwendung des Datenträgers (1) eine Ladung auf ein Gate der Speicherzelle (20) vor jeder Verwendung des Datenträgers (1) aufbringt, um einen Angriff mittels ionisierender Strahlung durch ein Entladen des Gates zu detektieren, wobei ein ansteigender Stromfluss als Folge des Entladens des Gates ein Indiz für einen solchen Angriff ist.

10. System, umfassend zumindest einen portablen Datenträger (1) nach einem der Ansprüche 1 bis 8 sowie ein Lesegerät zur Kommunikation mit dem portablen Datenträger (1).

## Claims

1. A portable data carrier (1), comprising
at least one non-volatile memory cell (20) and
a monitoring device (30) which, in a monitoring mode, is adapted to permanently monitor a current flow (I₃) between a source connector (S) and a drain connector (D) of the memory cell (20) in order to detect a change of the current flow (I₃), **characterized by**
a control device (40) which is adapted to switch the data carrier (1) to a secured state in dependence on the detected change of the current low (I₃) by deactivating predetermined functionalities of the data carrier (1),
wherein the memory cell (20) is an EPROM memory cell (20) or an EEPROM memory cell (20),
wherein the data carrier contains a charging device which is adapted to load a charge onto a gate of the memory cell (20) prior to each use of the data carrier (1) in order to detect an attack by means of ionizing radiation through a discharge of the gate, wherein an increasing current flow as a result of the discharge of the gate is an indicator of such an attack.

2. The portable data carrier (1) according to claim 1, **characterized in that** the monitoring mode starts directly after an initialization of the data carrier (1).

3. The portable data carrier (1) according to any of the claims 1 to 2, **characterized in that** the control device (40) is adapted to switch the data carrier (1) irreversibly to the secured state.

4. The portable data carrier (1) according to any of the claims 1 to 3, **characterized in that** the memory cell (20) is arranged in a region of security-relevant electronic components of the data carrier (1) or in a chip (10) of the data carrier (1) with security-relevant electronic components.

5. The portable data carrier (1) according to claim 4, **characterized in that** the security-relevant components comprise at least one data memory cell in which security-relevant data are stored.

6. The portable data carrier (1) according to claim 4 or 5, **characterized in that** the memory cell (20) is arranged in the region of security-relevant components or in the chip (10).

7. The portable data carrier (1) according to any of the claims 1 to 6, **characterized in that** the monitoring device (30) comprises at least one analog voltage comparator for permanently monitoring the current flow (I₃).

8. The portable data carrier (1) according to any of the claims 1 to 7, **characterized in that** the portable data carrier (1) is a chip card, an identification card, a card with payment function, a smart card, a (U)SIM mobile communication card or a secure multimedia card.

9. A method in a portable data carrier (1) according to the claims 1 to 8 with at least one non-volatile memory cell (20), comprising the steps of:
permanently monitoring a current flow (I₃) between a source connector (S) and a drain connector (D) of the memory cell (20) by means of a monitoring device (30) of the data carrier (1) in order to detect a change of the current flow (I₃);
**characterized by**
switching the data carrier (1) to a secured state by means of a control device (40) in dependence on the detected change of the current flow (I₃),
wherein the memory cell (20) is an EPROM memory cell (20) or an EEPROM memory cell (20),
wherein the data carrier (1) contains a charging device which, prior to each use of the data carrier (1), loads a charge onto a gate of the memory cell (20) prior to each use of the data carrier (1), in order to detect an attack by means of ionizing radiation through a discharge of the gate, wherein an increasing current flow as a result of the discharge of the gate is an indicator of such an attack.

10. A system comprising at least one portable data carrier (1) according to any of the claims 1 to 8 and a reading device for communication with the portable data carrier (1).

## Revendications

1. Support de données portable (1) comprenant
au moins une cellule mémoire (20) non volatile et
un dispositif de surveillance (30) conçu pour, dans un mode de surveillance, surveiller en permanence un flux de courant (I₃) entre une borne de source (S) et une borne de drain (D) de la cellule mémoire (20) afin de reconnaître une modification du flux de courant (I₃),
**caractérisé par**
un dispositif de commande (40) conçu pour, en fonction de la modification reconnue du flux de courant (I₃), commuter le support de données (1) vers un état sécurisé, ce qui a lieu en ce que des fonctionnalités prédéterminées du support de données (1) sont désactivées,
cependant que la cellule mémoire (20) est une cellule mémoire EPROM (20) ou une cellule mémoire EEPROM (20),
cependant que le support de données comporte un dispositif de chargement conçu pour, avant chaque utilisation du support de données (1), appliquer une charge sur une grille de la cellule mémoire (20) afin de détecter, par un déchargement de la grille, une attaque au moyen de rayonnement ionisant, cependant qu'un flux croissant de courant, occasionné par le déchargement de la grille, est un indice d'une telle attaque.

2. Support de données portable (1) selon la revendication 1, **caractérisé en ce que** le mode de surveillance démarre immédiatement après une initialisation du support de données (1).

3. Support de données portable (1) selon une des revendications de 1 à 2, **caractérisé en ce que** le dispositif de commande (40) est conçu pour commuter irréversiblement le support de données (1) vers l'état sécurisé.

4. Support de données portable (1) selon une des revendications de 1 à 3, **caractérisé en ce que** la cellule mémoire (20) est agencée dans une zone de composants électroniques du support de données (1) touchant à la sécurité ou dans une puce (10) du support de données (1) comportant des composants électroniques touchant à la sécurité.

5. Support de données portable (1) selon la revendications 4, **caractérisé en ce que** les composants électroniques touchant à la sécurité comprennent au moins une cellule de mémoire de données dans laquelle des données touchant à la sécurité sont mémorisées.

6. Support de données portable (1) selon la revendication 4 ou 5, **caractérisé en ce que** la cellule mémoire (20) est agencée dans une zone de composants électroniques touchant à la sécurité ou dans la puce (10).

7. Support de données portable (1) selon une des revendications de 1 à 6, **caractérisé en ce que** le dispositif de surveillance (30) comprend au moins un comparateur analogique de tension destiné à la surveillance permanente du flux de courant (I₃).

8. Support de données portable (1) selon une des revendications de 1 à 7, **caractérisé en ce que** le support de données portable (1) est une carte à puce, une carte d'identification, une carte dotée d'une fonction de paiement, une smart-carte, une carte de téléphonie mobile (U)SIM ou une carte de multimédia sûre.

9. Procédé dans un support de données portable (1) conformément aux revendications de 1 à 8, muni d'au moins une cellule mémoire (20) non volatile, comprenant les étapes :
surveillance permanente d'un flux de courant (I₃) entre une borne de source (S) et une borne de drain (D) de la cellule mémoire (20) au moyen d'un dispositif de surveillance (30) du support de données (1) afin de reconnaître une modification du flux de courant (I₃) ;
**caractérisé par**
commutation du support de données (1) vers un état sécurisé au moyen d'un dispositif de commande (40) en fonction de la modification reconnue du flux de courant (I₃),
cependant que la cellule mémoire (20) est une cellule mémoire EPROM (20) ou une cellule mémoire EEPROM (20),
cependant que le support de données (1) comporte un dispositif de chargement qui, avant chaque utilisation du support de données (1), applique une charge sur une grille de la cellule mémoire (20) avant chaque utilisation du support de données (1) afin de détecter, par un déchargement de la grille, une attaque au moyen de rayonnement ionisant, cependant qu'un flux croissant de courant, occasionné par le déchargement de la grille, est un indice d'une telle attaque.

10. Système, comprenant au moins un support de données portable (1) selon une des revendications de 1 à 8 ainsi qu'un appareil de lecture pour la communication avec le support de données (1) portable.
